# EUROPEAN PATENT SPECIFICATION

(11) **EP 1 952 641 B1**
(45) Date of publication and mention of the grant of the patent: **01.01.2020**
(21) Application number: 06849789.0
(22) Date of filing: 30.05.2006
(51) Int. Cl.: H04N 19/507, H04N 19/426

(54) **VIDEO COMPRESSION ENCODER**
VIDEOKOMPRESSIONSKODIERER
CODEUR DE COMPRESSION VIDEO

(30) Priority: 21.11.2005 US 282688
(43) Date of publication of application: 06.08.2008
(73) Proprietor: Vertiv IT Systems, Inc., Wilmington, DE 19801 (US)
(72) Inventor: DAMBRACKAS, William A., Weston, FL 33332-1810 (US); COSTA, Mario, Pembroke Pines, FL 33029 (US); GOODLEY, George Richard, Pompano Beach, FL 33060 (US)
(74) Representative: Studio Torta S.p.A.
(86) International application number: PCT/US2006/021182
(87) International publication number: WO 2007/097773

(56) References cited:
- GB-A- 2 318 956
- US-A- 4 142 243
- US-A- 4 369 464
- US-A- 5 864 681
- US-A1- 2005 069 034
- US-A1- 2005 089 091
- GOLDBERG M ET AL: "IMAGE SEQUENCE CODING USING VECTOR QUANTIZATION", IEEE TRANSACTIONS ON COMMUNICATIONS, IEEE SERVICE CENTER, PISCATAWAY, NJ. USA, vol. COM-34, no. 7, 1 July 1986 (1986-07-01), pages 703-710, XP002280029, ISSN: 0090-6778, DOI: 10.1109/TCOM.1986.1096600
- CAGNAZZO M ET AL: "Low-complexity scalable video coding through table lookup VQ and index coding", LECTURE NOTES IN COMPUTER SCIENCE/COMPUTATIONAL SCIENCE (CPAIOR 2011), SPRINGER, DE, 1 January 2002 (2002-01-01), pages 166-175, XP002324381, DOI: 10.1007/3-540-36166-9_15 ISBN: 978-3-540-24128-7
- CHRYSAFIS ET AL.: 'Line-Based, Reduced Memory, Wavelet Image Compression', [Online] March 2000, XP011025538 Retrieved from the Internet: <URL:http://www.sipl.usc.edu/~ortega/Studen ts/chrysafi/doc/ChristosChrysafis_line_base d_IP2000.pdf>

## Description

### FIELD OF THE INVENTION

The present invention relates generally to digital video compression systems.

### INTRODUCTION

In the commonly-owned patent application 10/260,534 ('534 application), published as US Publication No. US2005-0069034 one common inventor described a new technology for encoding digital video that exhibited particular success in the computer video arts. The contents of that publication will be presumed to be of knowledge to the reader.

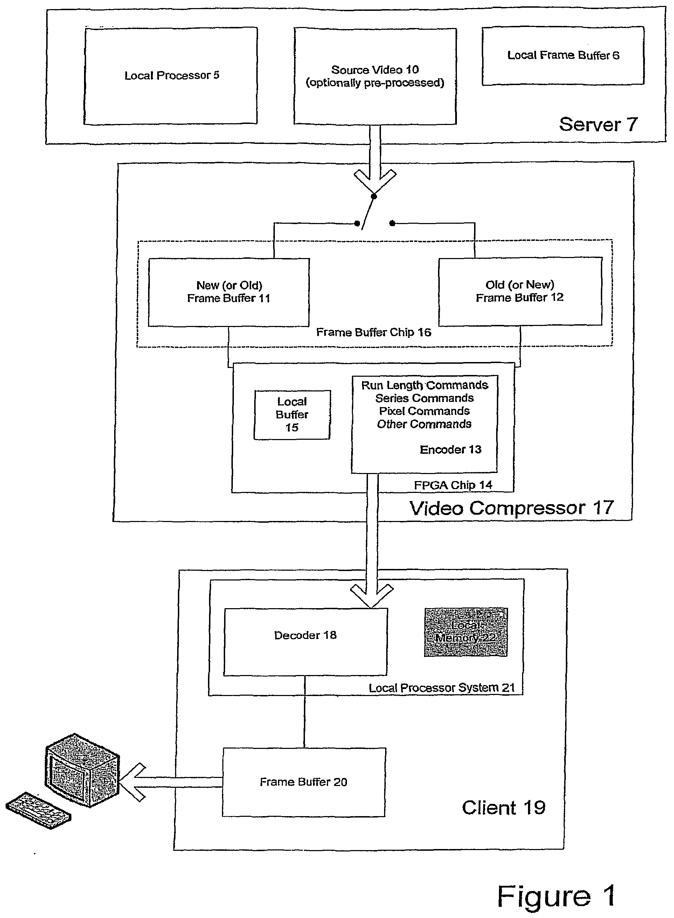

In the typical computer video scenario, digital pixel information is prepared by a server 7 (Figure 1) employing a local processor (video or CPU) 5 to coordinate the preparation of the video for a local-running application, and usually a frame buffer 6 to temporarily store the pixel signals for each pixel value on a current video screen (and sometimes some number of former video screens too). The frame buffer 6 may or may not be a memory element separate from the processor 5. The details of the preparation of digital video signals are not necessary for a full understanding of the present inventions, so a generic description of source video 10 (with or without known kinds of pre-processing, packeting, or conditioning) being provided to the video compressor 17 suffices. The source video 10 is usually, though not necessarily, serial and digital.

The video compressor 17 can be a local hardware component near or in the server 7 (anywhere, such as on a daughter card, a hang-off device, an external dongle, on the motherboard, etc.), a software component (anywhere, such as in a local CPU, a video processor, loaded in the motherboard, etc.), or an external pod communicating with the server via a communication link, network, wireless, or other coupling protocol.

Inside the video compressor 17, one of the frame buffers 11 and 12 receives the serial pixels from the source video 10 and loads them into the frame buffer to (typically) mimic the local frame buffer 6. A switch ahead of the frame buffers 11 and 12 loads a current (or "new") frame into one of the frame buffers 11 or 12 while the other of the frame buffers 11 or 12 retains the previous (or "old") frame that the switch had just previously directed to it. In that way, at any given time, one of the frame buffers 11/12 retains a complete old frame and the other of the frame buffers 11/12 is being fed a new frame. The frame buffers then alternative, frame-by-frame, storing/loading the old/new frames.

The old and new frames are used by the video compressor 17 to determine relationships between pixels in the current frame compared to the previous frame. An encoder 13 within the video compressor 17 determines those relationships between the pixels in the current frame (drawn from the new frame buffer 11/12) and pixels in the prior frame (drawn from the old frame buffer 11/12). The encoder 17 may also determine relationships between pixels each located with the current frame. In each case, the relationships can include run-length relationships or series relationships.

Run-length relationships identify runs of pixels in the serial pixel stream (from the source video 10) that have pixel values related to already known pixel values. By identifying the relationship, the decoder is instructed to "copy" the known pixel(s) for the identified run-length, rather than writing the independently identified pixel values. The run-length relationships can include any relationship determined between pixels of the current frame or between pixels of the current and previous frames. They may include the so-called (1) "copy old," (2) "copy left," (3) "copy above," or other locational relationship commands. The "copy old" (CO) command is particularly appropriate for the present disclosure. In it, the pixel values for pixel locations in the current run-length of the current frame are determined to be the same as those pixel values of the previous frame in the same pixel locations. The CO command simply tells the decoder copy the same pixels for a run of X number of pixels that are identical to the pixels in the same run location of the previous frame. Similarly, the "copy left" (CL) command and "copy above" (CA) command indicate that the present run of pixels are the same as the pixels on the left of the current pixels (in the case of the CL command), or the pixels are the same as the pixels above the current pixels (in the case of the CA command). Of course, other kinds of locational relationships (other can "old," "left," and "above") can be and are envisioned as well.

In the preferred run-length cases, the format for the encoding can include (using eight bit bytes by way of example only):
(1) For a first byte in the encoding, the byte can begin with a number of first bits identifying a code indicative of the run-length type (CO, CL, CA, etc.) followed by a remaining number of bits identifying the run length itself. For example, an eight bit byte can employ the first three bits for code indication followed by the next five bits indicating in a binary word the run length (up to a 2⁵ pixel run length).
(2) Another following byte of encoding if the run length exceeds 2⁵ pixels, where the first bit is a code indicating that the byte continues the previous run, followed by seven more bits in the binary word (which when strung with the previous 5 bits of the previous word will make a 12 bit word indicative of up to a 2¹² pixel run length).
(3) A number of additional following bytes like those in (2) where the run length exceeds the 2ⁿ pixel run length of the string of previous bits.

"Series" commands are a little different from the run-length commands and can contribute remarkable efficiency to the video compression. They are described in more detail in the '534 application, so only a brief description will be provided here. In essence, the series commands instruct the decoder to write a run of pixels using just two prior-known colors. In the preferred series cases, the format for the encoding can include (using eight bit bytes by way of example only):
(1) For a first byte in the encoding, the byte can begin with a number of first bits identifying a code indicative of the series command. When the encoder reads that command, it preferably employs the immediately previous two pixels colors (i.e., the two colors to the immediate left of the beginning of the current run) as the two known colors for writing the coming run. The bits in the encoding byte following the series command code indicate which of the two colors should be written for each of the coming pixels, with a "0" being indicative of the first color and a "1" being indicative of the second color. Thus, a byte of "command" followed by 00101 would mean write a pixel of the "0" color (i.e, the first of the known colors), followed by another "0" color, followed by a "1" color (i.e., the second of the known colors), followed by another "0" color, followed by another "1" color.
(2) Anther following byte of encoding if the series length exceeds five pixels, where the first bit is a code indicating that the byte continues the previous series, followed by seven more bits each indicating which of the two colors should be written for the next seven pixels.
(3) A number of additional following bytes like those in (2) where the series length exceeds the 12 pixels.

If neither run-length nor series encoding is available or plausible, then the encoder will resort to higher overhead single-pixel color commands (usually requiring three bytes per pixel color for five bit color, and more for higher quality color) to instruct the decoder on a particular pixel value.

As shown in Figure 1, the video compressor 17 includes two relevant hardware components: a frame buffer chip 16 and a processor such as an FPGA 14. Alternatives to those are well-known and contemplated herein but solely for the purpose of this description, they will be referred to as a frame buffer chip 16 and an FPGA 14. A typical FPGA will be programmed to incorporate the encoder 13 that encodes the video according to the above descriptions. It will also include a local buffer 15 of some limited size that is used for buffering information during FPGA processing. The additional frame buffer chip 16 is used because the local buffer 15 is typically not large enough to store even one frame of pixel information.

The video compressor 17 communicates with a client 19, typically by a network ' connection via a standard network interface (not shown) such as an Ethernet or other suitable network communication system. Of course, the video compressor 17 and client 19 could also communicate by another other communication means such as a hard wire, wireless, etc. The system of Figure 1 is not meant to be limited to a particular inter-entity communication methodology.

At the client 19, the decoder 18 is usually an application or script function in the local processing system 21 already in the client 19. If the client 19 is a computer workstation, for example, the decoder 18 is an application that runs on the local CPU employing some local memory 22. Also, client 19 usually contains a frame buffer 20 (sometimes on a separate video processing board) that receives the pixel information for a frame from the decoder 18. In practice, the objective is to move the information from the frame buffer 6 in the server 7 to the frame buffer 20 in the client 19 through the frame buffers 11/12 in the video compressor 17. In the midst, the video compressor reduces the size of the frame of information by the run-length, series, and pixel encoding and the decoder 18 restores the size of the frame by decoding it.

Presently, the cost of the frame buffer chip 16 is driving the cost of the video compressor 17. As the price of FPGAs for FPGA chip 14 (or alternatively ASICs, etc.) is falling, the price of the frame buffer chip has come to dominate the parts cost. We have developed a way to eliminate the frame buffer chip 16 without altering the kinds of code used and thus advantageously not altering the decoder function 18 in any way. Instead of storing all pixels in a video frame buffer, the disclosed encoder only stores check values for groups of pixels. Grouping of pixels can be done in any fashion, for example; a group can be all pixels on a single video line, a portion of a line, multiple lines or screen rectangles containing portions of multiple lines. For purposes of example only, the embodiment described below defines all pixels on each single video line as a group of pixels, therefore a video screen of 1024 by 768 pixels would have 1024 groups of pixels and 1024 check values stored in memory.

When the encoder finishes encoding the first line of the frame' according to the run-length, series, and pixel commands described above, it then runs a check value on the encoding and stores that check value for that line in the local buffer 15 of the FPGA. It then sends the encoding to the decoder 18, which decodes the information in its normal manner and loads the resultant pixel values for that line in the frame buffer 20, as usual. The encoder then continues with the next line of the frame until each line of the frame is encoded, a corresponding check value is stored in the local buffer 15, and the encoding is sent to the decoder 18.

When the first line of the next frame arrives, it too is encoded by the encoder and its check value determined. If the check value is the same as the check value stored for the prior frame, then the encoding is discarded and the encoder re-codes the line as a "copy old" command using the entire line as the run length. The stored check value remains the same in the local buffer 15 and will be used again for the same line when the next frame arrives. The decoder, receiving the "copy old" command operates on them as it normally would; it copies the old pixels from the prior known frame for the entire line.

If the check value for a line is different from that stored in the local buffer 15, then the encoder overwrites the new check value for that line in the local buffer 15 and then sends the new encoded line to decoder 18. Decoder 18 again decodes the line as it normally would.

If the network throughput is insufficient for an encoded line to be sent, the encoder leaves the check value for that group unchanged and sends a command instructing the decoder not to change those pixels (even though they did change). This defers the updating of that line until the next frame. (This form of flow control would not be required if a frame buffer were used to hold all pixels from all lines until the network throughput was sufficient to resume sending).

Whenever a line is not updated and its updating is deferred until the next frame (as described above), the Copy Above (CA) command can not be used during the encoding of the line immediately following the deferred line, however all other encoding commands can be used.

As can been seen, the decoder 18 has no ability to realize when the encoder has chosen to encode the line based on the normal encoding procedure versus the mandated "copy old for a line run-length" procedure. It simply writes pixels as it's told by the same kinds of run-length, series, and pixel commands normally sent to it. The encoder sends the normal run-length, series, and pixel commands line-by-line unless it determines for a particular line that a check value is the same, in which case it mandates the "copy old for a line run-length" command.

In the end, the encoder no longer has to store entire frames of information, so the frame buffer chip can be eliminated. All of its encoding can be accomplished by receiving and encoding just a line or so at a time using just "copy left," "copy above," "make series," and "draw pixel" commands until the check value determination reveals that a "copy old" is appropriate. In that instance, the encoder does not even have to know (and could not find out anyway) what the "old" pixels were-only that whatever the decoder has stored as the "old" pixels are ones that it should copy. The encoder then stores only a line (or few lines), which is a small enough amount of data (compared to one or two entire frames, for example) that it can be stored in the local buffer 15 and the frame buffer chip can be eliminated from the video compressor.

### BRIEF DESCRIPTION OF THE DRAWINGS

The present invention, in order to be easily understood and practiced, is set out in the following non-limiting examples shown in the accompanying drawings, in which:
**Fig. 1** is an example system employing a frame buffer in the video compressor;
**Fig. 2** is an example system eliminating the frame buffer from the video compressor;
**Fig. 3** is a schematic representation of example video compression processing;
**Fig. 4** is another schematic representation of example video compression processing;
**Fig. 5** is an example comparison function in the encoder;
**Fig. 6** is a flow chart of an example video compression process; and
**Fig. 7** is a schematic representation of an example video compression process.

### DETAILED DESCRIPTION OF THE PREFERRED EMBODIMENT

Reference is made to Figures 1 - 7 in which identical reference numbers identify similar components.

In an example video compression system, a client 19 with a workstation monitor is expected to receive video signals for display on the monitor from a distant server 7. Video signals are notoriously high-volume signals. A single screen of video at a common resolution of 1024 by 768 can be around one million pixels. Each pixel has a defined color, and each color has a defined red component, blue component, and green component (other color schemes are also known and can be used, but the so-called RGB system will be used herein by way of illustration and not limitation). Each red, blue and green color component is defined by a numeric value written as a binary word, sometimes five bits long (providing 2⁵=32 possible color values for each red, green, and blue) but as long as the system can reasonably accommodate without limit. With five bit component values, a minimum of 15 bits are required to define each single pixel color, which are usually embodied in two eight-bit bytes. The one-million pixels for a video screen thus require two-million bytes to define the colors. A screen usually refreshes every 1/60^{th} of a second, so transportation of 120 megabytes per second would be required to deliver streaming video without compression. And, that assumes a relatively low 5-bit color scheme, where many users would prefer a higher quality of color composition. Some communication links may accommodate such large volumes of constantly streaming data-but not many-especially if there are multiple simultaneous users employing the same communication link.

To alleviate the video data volume, a video compressor 17 receives the video from a source video 10 and reduces it. Each frame of the video is alternatively loaded into a new/old frame buffer 11/12 where it is retained for use by the encoder 13 programmed into an FPGA chip 14. According to one example, the encoder 13 encodes the video by a hierarchical choice of run-length encoding, series encoding, or as a last resort individual pixel encoding. The run-length encoding essentially identifies a run of pixels the color of which can be identified on the basis of pixel colors that are already known. Thus, a CO command will instruct the decoder for a current pixel to copy the color of the pixel at the same pixel location as the current pixel but from the previous frame. A CA command will instruct the decoder for a current pixel to copy the color of the pixel immediately above the current pixel in the same frame. A CL command will instruct the decoder for a current pixel to copy the color of the pixel immediately to the left of the current pixel in the same frame. Assuming again, by way of example only, a five-bit color scheme in which each pixel would require three eight-bit bytes to identify its individual color, that same pixel may be identifiable as a Copy command in only a single byte. Further, if a continuous run of pixels can be identified as all comporting to a common command condition (such as each pixel in a run of 100 pixels is the same as their corresponding old, above or left pixels), then a code can be written to tell the decoder in a byte or two that a Copy command applies to a run of 100 pixels. In such a case, a run of 100 pixels that could require 300 bytes of coding to individually identify each pixel color could be accurately encoded with only a byte or two.

Example formats for copy encoding can be found in the '534 application. One such example is described below for purpose of convenience to the reader. In it, an eight-bit byte is assumed, although the encoding can be used in any byte size of any number of bits. For copy commands, each byte is in the format: CCCRRRRR, where the first three C-bits identify the command type according to the following key:
000 = Copy Old Command
001 = Copy Left Command
010 = Copy Above Command

The next five R-bits identify the run length. If the current run is determined by the encoder 13 to be less than 2⁵ (i.e., 32 continuous pixels), then the five R-bits of one byte will encode the run length. If the run length is more than 2⁵ then a following eight-bit byte is encoded with the same three command bits followed by another five bits that are combined with the five bits of the preceding byte to make a ten-bit word accommodating a 2¹⁰ run length (i.e., 1024 continuous pixels). A third byte can be added to encode a run of 2¹⁵ run length (i.e., 32,768 continuous pixels) and a fourth byte can accommodate an entire screen as a continuous run of 2²⁰ run length (i.e., 1,048,576 continuous pixels, which is more than the pixels in one full screen of 760x1024).

Thus, a continuous run amounting to an entire screen that would have taken around. 120 million bytes to write the individual colors can be written in just four bytes of encoding.

The series command is used whenever a run of pixels of just two colors is found. In it, the two colors are first encoded using one of the copy of pixel-draw commands so the decoder knows the actual value of the two possible colors (in essence, the decoder knows that the two colors immediately preceding the series command are the two colors to be used in the series, with the first color assigned the "0" value and the second color assigned the "1" value). The first byte in the series bytes has the following format: CCCXDDD, where C is the command key identifying the series command, X is the multiple byte indicator, and the D-bits indicate which of the two possible colors the next three consecutive pixels are. In this case, the CCC key for the series command is 011 (a code unique compared to the copy command keys). The X bit is set to "0" if the run of two-color series is just three pixels (corresponding to the three D-bits) long, and to "1" if the next byte continues the two-color series. Each subsequent series byte then takes the form of: XDDDDDDD, where the X-bit again indicates whether the next byte continues the series (by indicating "1" until the last byte in the series is reached in which case it is set to "0" to indicate the next byte is the last one) and each D-bit again indicates the "0" or "1" color for the next seven pixels in the continuous series.

If neither a copy command nor a series command will effectively encode the next pixel(s), the encoder resorts to encoding the next pixel as a make pixel command. In this command, the pixel color is communicated using the traditional Red, Green, Blue color values. For five bit color, the two byte pixel command takes the form of: CRRRRRGG GGGBBBBB, where C is a key, for example "1," that identifies the make-pixel command (note that none of the other commands began with a "1"), RRRRR is five-bit red color value, GGGGG is the five-bit green color value, and BBBBB is the five-bit blue color value. The encoder 13 tries to encode pixels using other, more efficient encoding before it finally resorts to as few make-pixel encodings as possible and can return again to a copy or series command.

The above descriptions, especially with respect to the copy old command, require the video compressor 17 to store a previous frame as it receives the current frame from the source video 10 in order to compare the current pixel values with the pixel values in the same locations of the previous frame. Thus, Figure 1 illustrates new and old frame buffers 11/12 in the frame buffer chip 16. With it, an FPGA chip 14 contains the encoder 13 and some smaller amount of local memory 15.

On the client side, a decoder 18 receives the copy, series and make-pixel commands and re-writes the pixel colors based on those commands into a frame buffer 20. The decoder 18 can be a script function or an application written in the existing local processor 21 of the client 19.

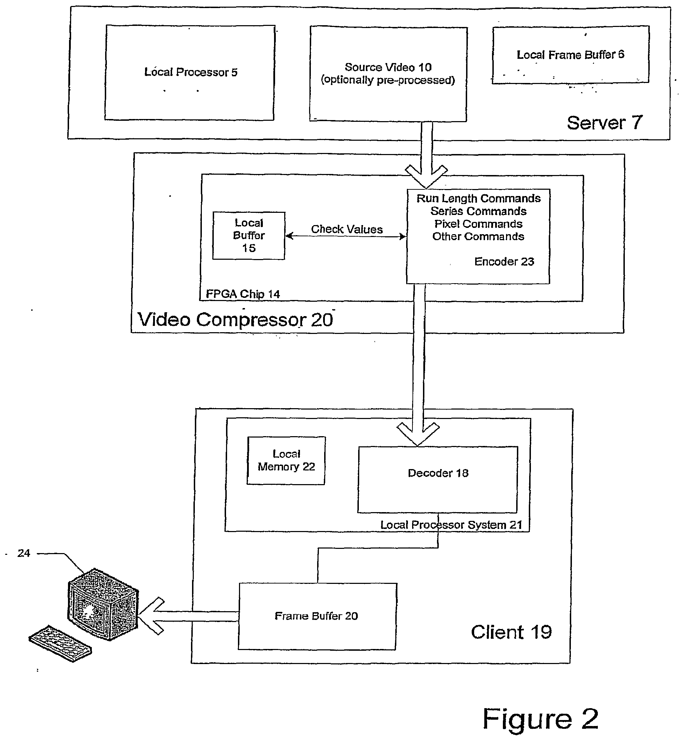

The video compressor 17 can be employed as a hang-on device to the server 7, or it can be included in server 7 as a daughter card, as a built-in to the video processor, as an embedded process in the mother board; or any other hardware or software accommodation. In any event, it is advantageous to reduce the cost of the components in the video compressor 17, including the frame buffer chip 16. The embodiment of figure 2 eliminates the frame buffer chip entirely.

In Figure 2, the video compressor 20 is still fed the exact same source video as the video compressor 17 from Figure 1. Video compressor 20, though, does not receive the video into a frame buffer, nor does it receive the video into a video switch. Rather, the video stream goes into the FPGA chip 14, where at most a couple of lines are stored in the local buffer 15 while the encoder 23 encodes the current line. At first, the encoder 23 encodes the line exactly as it would with the frame buffers present. By eliminating the frame buffers though, the encoder 23 no longer has the prior frame to use in determining the appropriateness of "copy old"-type commands. It accommodates that loss by storing a check value for each line and using that check value to presume "copy old"-type commands apply whenever the check values match for a given line between frames.

The decoder 18 operates the same as the decoder did with the frame buffers present. In other words, it does not know or care whether the coding commands were produced by standard encoding or by check value replacement encoding. It simply decodes the run-length, series, and pixel commands exactly as it would have done otherwise.

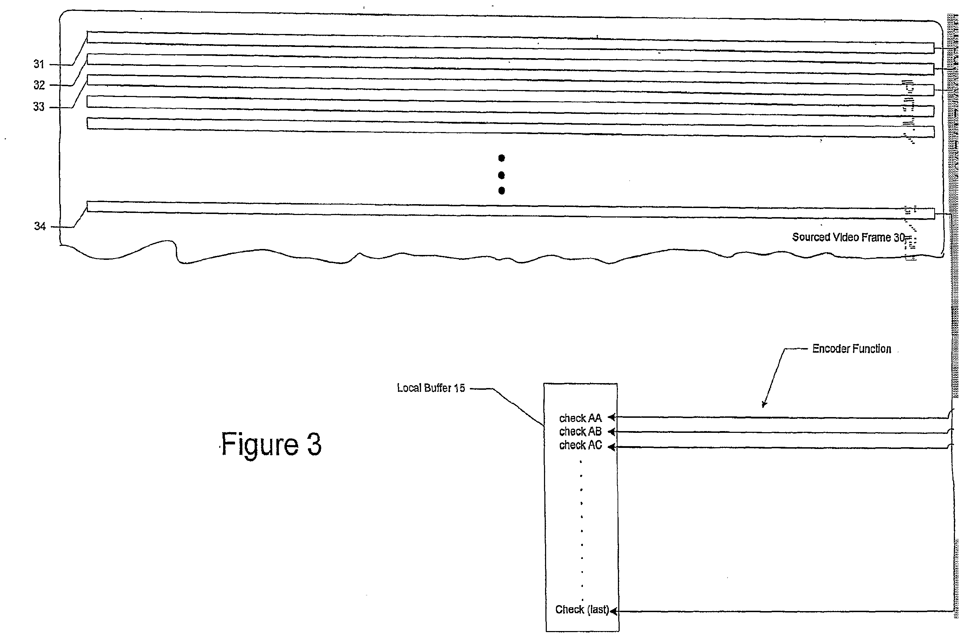

The encoding steps are shown schematically in Figure 3. There, a sourced video frame 30 from source video 10 is presented to the encoder 23, pixel-by-pixel and line-by-line. One line 31 is received by the encoder 23 and is encoded according to its standard run-length, series, and pixel commands. The hierarchy and choice of command regulations are appropriate additional features, but are not constraints on how the present system operates. Once the encoder 23 finishes one line of encoding according to whatever run-length commands, series commands, pixel commands, or any other type of encoding commands are available, it performs a check value operation on that encoded line.

The check value operation can be any kind of determinative operation. The simplest may be a check sum in which the bit values of the encoded bytes are summed. Any other kind of determinative operations could also be employed. Check value algorithms are widely-known and vary widely. Any of the known check-sum, cyclic redundancy check or other determinative algorithms may be employed, and check values or determinative algorithms designed in the future may be employable as well. Whichever check value algorithm is chosen, it should in ideal situation yield a value that is uniquely associated with that object, like a fingerprint. There is, however, a trade-off between degree of distinction and size/complexity of the check value. A check value that is long and complex may be virtually guaranteed to uniquely correspond to a particular line encoding, but it may also be so long and complex that its determination or storage impedes the desirable results of encoding the video quickly and storing the check value locally. That is, a check value that takes too long to compute will hold up the delivery of the video line to the decoder (10's of thousands of lines may be moving each second). Also, a check value that is itself too long may fill the local buffer 15 of the FPGA will check sum values, leaving no further buffer space available for general FPGA processing.

With any check value algorithm it is possible that the same value could be inadvertently created for two different screens so the preferred check value algorithm would be one that minimized this probability. Check value algorithms that include pixel position in the calculation are preferred because they minimize inadvertently creating the same value for different video screens that typically occur sequentially, such as a cursor moving horizontally and relocating along a video line. A method of periodically updating the decoder's video screen without relying on the check value could also be included since the chance of inadvertently creating the same value for two different screens can be minimized but never completely eliminated. A 16-bit check value has a 1 in 65,536 chance of inadvertently creating the same value for two different screens.

The trade-offs for selecting pixel group size interact with the trade-offs for selecting the length of the check value. Larger groups require fewer check values per frame but are more wasteful when network throughput is insufficient. The amount of buffer memory available and the expected network throughput are key factors in selecting the optimal value for both of these values.

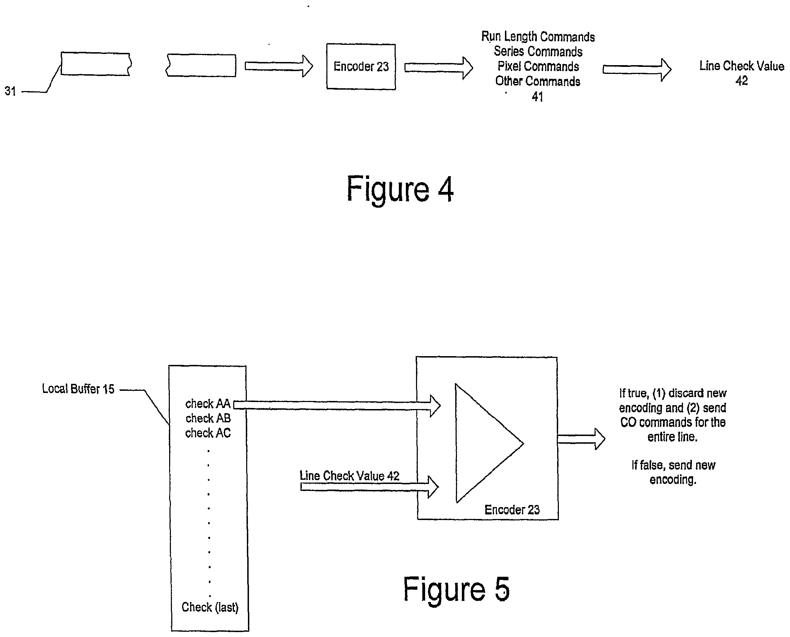

Once an appropriate check value algorithm is chosen and employed on the encoded result of line 31 of Figure 3, it is stored as "Check AA" in local buffer 15 and the encoded line is sent to the decoder 18. The process is also shown in Figure 4, where the line 31 is sent to the encoder 23 from the source video 10. The encoder 23 encodes the line 31 as run-length, series, pixel, and other commands 41, calculates a check value 42 based on the encoded series of bytes, and then loads the check value into an addressed memory location of the local buffer 15 for the particular line 31. The next line, line 32 9Figure 3), is then received, encoded, check-valued into "Check AB," and delivered to the decoder 18. The process continues for the next line 33, all the way through the last line 34, whose encoded line check value is stored in local buffer 15 as "Check (last)."

Referring to Figure 5, when the next frame arrives at the encoder 23 from the source video 10, the first line, line 31, is encoded by the same standard encoding algorithm. Of course, "copy old" commands are not available initially to the encoder 23 because the "old line" is no longer stored anywhere accessible to the encoder 23. Other copy commands (such as copy left or copy above, if the above line is still available) can be employed to run-length encoding. After encoding line 31, the check value determination is made again for the encoded bytes from the currently encoded line. That check value 42 (Figure 5) is used by the encoder 23 to compare with the check value AA associated with the same line from the previous frame. If the comparison yields a match (i.e., is "true") then the encoded bytes that the encoder 23 just obtained for the line are discarded and the line is re-encoded as a "copy old" command for a run-length equal to the entire line. Since the encoder 23 knows the resolution of the frame (including the line length), it does not even resort back to actual pixel values of the line 31; it simply sends a code indicating "copy old [line length]." The check value AA then remains the same-it is not overwritten.

If during the comparison of Figure 5 between the current check value 42 and the stored check value AA, a match is not made (i.e., it is "false"), then the actual encoding for the current line (that was just performed by the encoder prior to obtaining the check value on it) is sent to the decoder. The check value 42 is then overwritten into the memory location where "Check AA" is so the next time the line 31 (of the next frame) is encoded, the now-current, then-previous check value will be stored in the check value buffer for comparison purposes.

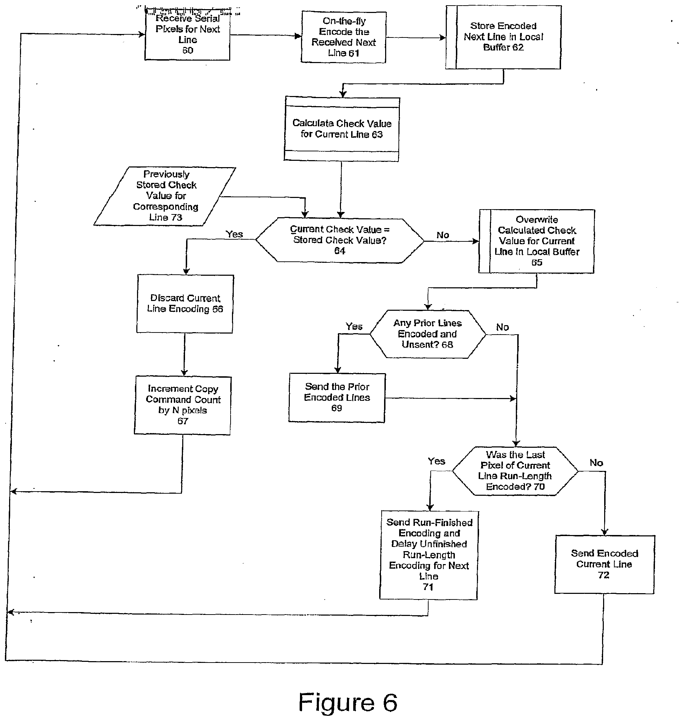

Figure 6 is a flow chart of an example process. In step 60, a line of pixels values are received from the source video by the encoder 23. At step 61, the encoder 23 encodes the line 61 by, for example, Dambrackas Video Compression encoding, or some other suitable compression scheme. At step 62, the bytes of code for the encoded line are stored in the local buffer 15. The encoder then uses the determinative algorithm to determine a check value, at step 63, uniquely associated with the string of bytes of code for the encoded line. At step 64, the check value is compared with the previously-stored check value from data location 73.

If the check value matches the stored check value, then the current bytes of codes are discarded at step 66 and a copy command counter (in the FPGA code) is incremented for the N pixels in line (i.e., the line length), at step 67. That counter is optionally used to increase the efficiency of the encoding to add subsequent line runs if the next lines can also be encoded by the "copy old" command, meaning that the check values for the subsequent lines match their corresponding stored values as well. As will be seen, once a check value of a next line does not match the corresponding stored value, then the counter will be reset and the counter value will be used as the run length for the single "copy old" command sent by the encoder 23. That is, the "copy old" command will announce a run length in excess of a single line length.

If the check value does not match, at step 65, the calculated check value for the current line is overwritten into the local buffer 15. That indicates that the current encoding is different from the corresponding line of the prior frame and must be sent to the decoder. But first, the encoder 23 determines whether any prior lines are encoded and unsent, at step 68. That occurs when, as described above, a "copy old" command of one or more line run-length has been accumulating in the counter (from step 67, for example). If the counter indicates that a "copy old" line(s) is waiting to be sent, at step 69, it is compiled and sent. If no such delayed commands exist, then the encoded current line is sent at step 72, after (optionally) determining at step 70 whether the last pixel in the current line is run-length encoded-in which case the first one or more pixels of the next line may be includable in the same run for efficiency. If so, at step 71, the portion of the current line that is ready for sending is sent and the end-portion of the line that has been preliminarily run-length encoded is held over to the next line to determine whether some starting pixels of the next line can be included in the same run. When the run is completed, it will be sent as a whole during an appropriate next step 68/69.

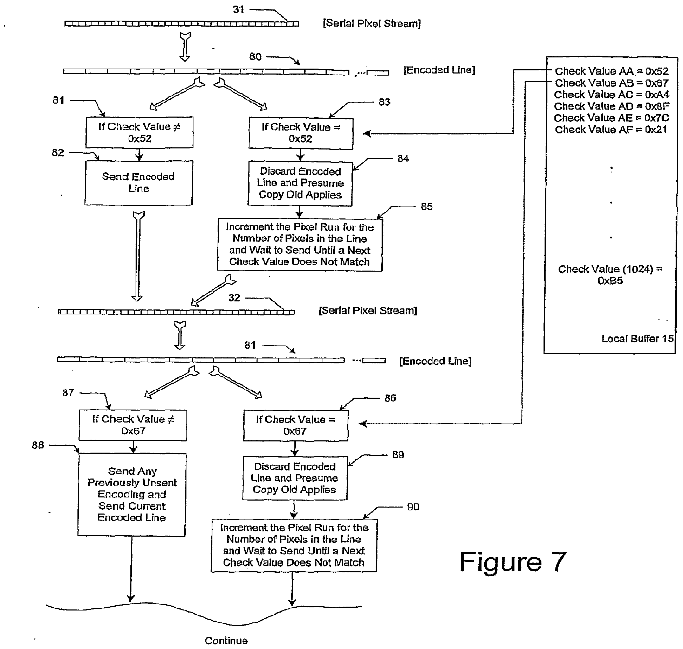

Figure 7 illustrates a more comprehensive schematic of an example system in which the pixel line 31 in a serial pixel stream is received by the encoder 23, and encoded into the bytes of code 80. The encoder runs the check value algorithm on the bytes of code 80 to determine the corresponding (ideally, unique) check value for the line 80 and hence the line 31. As shown, already the local buffer 15 has stored a prior check value for that line at location AA equal to "0x52." If the current check value equals 0x52, at step 83, then line 80 is discarded and the encoder presumes the "copy old" command applies to the entire line 31, at step 84.

It should be noted that it may turn out that the check value for a current line is only coincidently the same as for a previous line that is really substantively different; but, such situations are unlikely and in the exceedingly rare event that they do happen, they will be quickly overwritten by the next corresponding frame line. The check value methodology and sophistication can be chosen to correspond to the level of false matches that can be tolerated.

The encoder 23 does not immediately send the "copy old" command when the check values match, but instead increments a running counter that counts the number of pixels in the previous and current lines that qualify for the "copy old" command. This improves the efficiency of the compression by increasing the run lengths where appropriate. That process of incrementing the counter and waiting for the next line is shown at step 85.

If the encoder finds no match between the current check value and the stored value, it sends the encoded line 80 to the decoder 18, after sending any "copy old" runs that have been delayed by step 85.

Then, the next line 32 arrives at the encoder 23. It is encoded into code stream 81, and its associated check value is determined and compared with the previously stored value of 0x67. Again, if the check value matches, at step 86, then the code stream 81 is discarded at step 89 and the "copy old" command is again presumed. At step 90, the pixel run is again incremented and held until a next line no longer qualifies for the "copy old" command. If a match does not occur, at step 87, then any unsent "copy old" commands (from, for example, step 85) are compiled and sent based on a run equal to the counter value, followed by the current code stream 81. That mis-match check value from step 87 is then over-written into the local buffer 15 at the location corresponding to the line (in this case, Check Value AB). The process then continues from line-to-line and frame-to-frame, indefinitely.

Although the disclosure describes and illustrates various embodiments of the invention, it is to be understood that the invention is not limited to these particular embodiments. Many variations and modifications will now occur to those skilled in the art of backup communication. For full definition of the scope of the invention, reference is to be made to the appended claims.

## Claims

1. A video encoder receiving a serial stream of pixel data corresponding to lines of pixels in a video frame of information, comprising:
a processor in a chip, with a local operating buffer (15) also in the chip, programmed to:
encode the pixels of a given line (31) into a code stream based on an encoding algorithm,
determine a check value for the code stream based on a check value algorithm,
store the check value for the given line in a memory location of the local operating buffer (15) corresponding to the given line (31),
continue (33, 34) the encoding, determining and storing operations until the frame of information is encoded, and
for a next video frame of information:
encode the pixels of a given current line (31) into a current code stream based on the same encoding algorithm,
determine a current check value for the current code stream based on the same check value algorithm,
compare the current check value with the stored value for the corresponding given line of the previous frame, and
if the current check value is the same as the stored value for the corresponding given line of the previous frame, preparing a copy command instructing a decoder (18) to copy the pixel values of the given line of the previous frame, and
if the current check value is not the same as the stored value for the corresponding given line of the previous frame, sending the current code stream to the decoder (18) and overwriting the current check value to the memory location of the local operating buffer (15) corresponding to the given line.

## Patentansprüche

1. Video-Encoder, der einen seriellen Strom von Pixeldaten empfängt, die Zeilen von Pixeln in einem Informations-Video-Frame entsprechen, mit:
einem Prozessor in einem Chip, mit einem ebenfalls in dem Chip vorgesehenen lokalen Betriebspuffer (15), wobei der Prozessor dazu programmiert ist:
die Pixel einer gegebenen Zeile (31) zu einem Code-Strom basierend auf einem Codierungsalgorithmus zu codieren,
einen Prüfwert für den Code-Strom basierend auf einem Prüfwertalgorithmus zu bestimmen,
den Prüfwert für die gegebene Zeile in eine der gegebenen Zeile (31) entsprechende Speicherstelle des lokalen Betriebspuffers (15) zu speichern,
die Codier-, Bestimmungs- und Speicheroperationen fortzusetzen, bis der Informationsframe codiert ist, und
für einen nächsten Informations-Video-Frame:
die Pixel einer gegebenen aktuellen Zeile (31) basierend auf demselben Codierungsalgorithmus zu einem aktuellen Code-Strom zu codieren,
einen aktuellen Prüfwert für den aktuellen Code-Strom basierend auf demselben Prüfwertalgorithmus zu bestimmen,
den aktuellen Prüfwert mit dem gespeicherten Wert für die entsprechende gegebene Zeile des vorherigen Frames zu vergleichen, und
wenn der aktuelle Prüfwert gleich dem gespeicherten Wert für die entsprechende gegebene Zeile des vorherigen Frames ist, einen Kopierbefehl zu erstellen, welcher einen Decoder (18) anweist, die Pixelwerte der gegebenen Zeile des vorherigen Frames zu kopieren, und
wenn der aktuelle Prüfwert nicht gleich dem gespeicherten Wert für die entsprechende gegebene Zeile des vorherigen Frames ist, den aktuellen Code-Strom an den Decoder (18) zu senden und die der gegebenen Zeile entsprechende Speicherstelle des lokalen Betriebspuffers (15) mit dem aktuellen Prüfwert zu überschreiben.

## Revendications

1. Codeur vidéo recevant un flux en série de données pixels correspondant à des lignes de pixels dans une trame d'information vidéo, comprenant :
un processeur dans une puce, avec une mémoire tampon locale (15) également dans la puce, programmé pour :
coder les pixels d'une ligne donnée (31) en un flux de codes sur la base d'un algorithme de codage,
déterminer une valeur de contrôle pour le flux de codes sur la base d'un algorithme de valeur de contrôle,
stocker la valeur de contrôle pour la ligne donnée dans un emplacement mémoire de la mémoire tampon locale (15) correspondant à la ligne donnée (31),
poursuivre (33, 34) les opérations de codage, détermination et stockage jusqu'à ce que la trame d'information soit codée, et
pour une trame d'information vidéo suivante :
coder les pixels d'une ligne donnée en cours (31) en un flux de codes en cours sur la base du même algorithme de codage,
déterminer une valeur de contrôle en cours pour le flux de codes en cours sur la base du même algorithme de valeur de contrôle,
comparer la valeur de contrôle en cours avec la valeur de contrôle stockée pour la ligne donnée correspondante de la trame précédente, et
si la valeur de contrôle en cours est la même que la valeur de contrôle stockée pour la ligne donnée correspondante de la trame précédente, préparer une instruction de copie commandant à un décodeur (18) de copier les valeurs de pixels de la ligne donnée de la trame précédente, et
si la valeur de contrôle en cours n'est pas la même que la valeur de contrôle stockée pour la ligne donnée correspondante de la trame précédente, envoyer le flux de codes en cours au décodeur (18) et réécrire la valeur de contrôle en cours dans l'emplacement mémoire de la mémoire tampon locale (15) correspondant à la ligne donnée.
